# EUROPÄISCHE PATENTSCHRIFT

(11) **EP 1 077 556 B1**
(45) Veröffentlichungstag und Bekanntmachung des Hinweises auf die Patenterteilung: **30.07.2003**
(21) Anmeldenummer: 99440228.7
(22) Anmeldetag: 18.08.1999
(51) Int. Cl.: H04L 12/28, H04Q 7/38, H04Q 7/24, H04L 12/56

(54) **Datenübertragung zwischen einer ersten Mobilfunkvermittlungsstelle eines ersten Mobilfunksystems und einer zweiten Mobilfunkvermittlungsstelle eines zweiten Mobilfunksystems**
Data communication between a first mobile switching center of a first wireless communication system and a second mobile switching center of a second wireless communication system
Communication de données entre un premier centre de commutation mobile d'un premier système de transmission sans fil et un deuxième centre de commutation mobile d'un deuxième système de transmission sans fil

(43) Veröffentlichungstag der Anmeldung: 21.02.2001
(73) Patentinhaber: ALCATEL, 75008 Paris (FR)
(72) Erfinder: Braun, Achim, 71106 Magstadt (DE); Rotter, Thomas, 73776 Altbach (DE)
(74) Vertreter: Schultenkämper, Johannes

(56) Entgegenhaltungen:
- EP-A- 0 836 338
- WO-A-96/10305
- WO-A-96/27960
- WO-A-98/59513
- US-A- 5 608 779
- BERRUTO E ET AL: "VARIABLE-RATE FOR THE BASIC SPEECH SERVICE IN UMTS" PROCEEDINGS OF THE VEHICULAR TECHNOLOGY CONFERENCE,US,NEW YORK, IEEE, Bd. CONF. 43, Seite 520-523 XP000393235 ISBN: 0-7803-1267-8

## Beschreibung

Ausgehend von den bestehenden Mobilfunksystemen, die zu der sogenannten zweiten Generation gehören, wie etwa dem bekannten Mobilfunksystem GSM (Global System for Mobile Communications), werden neue Mobilfunksysteme für die sogenannte dritten Generation entwickelt, so etwa das als UMTS (Universal Mobile Telecommunications System) bezeichnete Mobilfunksystem, welches zur Zeit mit einer weltweiten Beteiligung der Telekommunikationsindustrie standardisiert und entwickelt wird. Im Vergleich zu den bisherigen Mobilfunksystemen, insbesondere zum GSM, soll das UMTS sich durch höhere und flexible Übertragungsraten auszeichnen. Außerdem soll im UMTS vorzugsweise eine paketorientierte Vermittlungstechnik, insbesondere ATM, eingesetzt werden. Hingegen wird in den bestehenden Mobilfunksystemen zumeist leitungsorientierte Vermittlungstechnik eingesetzt.

Aus der WO 96-27960 (siehe insbesondere Seite 5, Zeilen 15-34 und Fig. 5) ist ein Übertragungsverfahren für Daten bekannt, bei dem die Daten innerhalb von Datenrahmen mit einer festen Anzahl von Datenfeldern ("number of information bits is fixed") übertragen werden, wobei die Nutzdaten ("user data") mit einer variablen
Nutzdatenübertragungsrate übertragen werden. Abhängigkeit der Datensignalrate ("data signal rate") werden für die Nutzdaten die benötigten Datenfelder ("information bits") verwendet, die übrigen Datenfelder werden mit Füllbits ("stuff bits") gefüllt. Dieses Übertragungsverfahren wird auf dem Funkweg (siehe in Anspruch 1 "radio path" sowie Seite 9, Zeilen 20-22) zwischen dem mobilen Teilnehmerendgerät und der Funkfeststation angewendet, nicht jedoch zwischen Komponenten auf der Infrastrukturseite, wie etwa zwischen der Funkfeststation (base station) und der Mobilfunkvermittlungsstelle (mobile switching center). Auch wird dort dieses Übertragungsverfahren nur im Zusammenhang mit einem einzelnen Mobilfunksystem beschrieben, nicht jedoch im Zusammenhang mit zwei Mobilfunksystemen, die über eine Schnittstelle miteinander verbunden sind.

In der WO 96-10305 (siehe insbesondere Seite 3, Zeilen 5-11 und Seite. 8, Zeilen 7-23) wird ein Datenübertragungsverfahren auch im Zusammenhang mit einem Weiterreichen ("handover") einer Mobilstation beschrieben, die von einer Funkzelle zur nächsten wechselt. Es werden dort die Daten innerhalb von TDMA-Datenrahmen übertragen (siehe dort Seite 8, Zeilen 7-23 und Fig. 5), wobei eine Mobitstation ihre Daten auch über mehrere Datenrahmen verteilt übertragen kann. Die entsprechende Zuteilung von TDMA-Zeitschlitzen und Datenrahmen wird dort als "muttislot access technique" bezeichnet und erlaubt eine flexible Datenübertragungsrate. Jedoch bezieht sich dieses bekannte Verfahren nur auf die Übertragung von Daten auf der Funkverbindung zwischen Mobilstation und Funkfeststation, nicht aber auf andere Verbindungen, insbesondere nicht auf Verbindungen zwischen Komponenten auf der Infrastrukturseite, wie etwa zwischen der Funkfeststation (base station) und der Mobilfunkvermittlungsstelle (mobile switching center). Auch wird dieses bekannte Verfahren dort nur im Zusammenhang mit einem einzelnen Mobilfunksystem beschrieben, nicht jedoch im Zusammenhang mit zwei Mobilfunksystemen, die über eine Schnittstelle miteinander verbunden sind.

In dem Artikel "Mobilfunk der dritten Generation" von M. Kien und S. Gneiting, erschienen in der Fachzeitschrift "Funkschau", Ausgabe 7/99, WEKA-Verlag, Poing, Deutschland, wird beschrieben, dass das neue Mobilfunksystem UMTS zusätzlich zu den bestehenden Mobttfunksystemen aufgebaut und ausgebaut werden soll. Dabei wird nicht nur an eine simple Koexistenz der verschiedenen Mobilfunksysteme gedacht. Vielmehr sollen die Mobilfunksysteme der verschiedene Generationen miteinander verbunden werden, so dass ein und dasselbe drahtlose Teilnehmerendgerät in den verschiedene Mobilfunksystemen betrieben werden kann. Solch ein Teilnehmerendgerät wird als "multi-mode-fähiges" Teilnehmerendgerät bezeichnet. Es soll nicht nur in den verschiedenen Mobilfunksystemen in Betrieb genommen werden können, sondern es soll auch im laufenden Betrieb, insbesondere während eines Gesprächs oder einer Datenübertragung, von einem Mobilfunksystem zum anderen weitergereicht werden können.

Aufgabe der Erfindung ist es, ein Verfahren und Vorrichtungen vorzuschlagen, mit denen verschiedene Mobilfunksystem möglichst einfach miteinander verbunden und die eingangs genannten technischen Anforderungen erfüllt werden können.

Gelöst wird die Aufgabe durch ein Verfahren mit den Merkmalen nach Anspruch 1 und durch Mobilfunkvermittlungsstellen nach Anspruch 7 und 8 sowie durch Schnittstellenschaltungen nach Anspruch 9 und 10 mit den Merkmalen nach einem der nebengeordneten Ansprüche.

Demnach wird ein Verfahren vorgeschlagen zur Datenübertragung zwischen einer ersten Mobilfunkvermittlungsstelle eines ersten Mobilfunksystems und einer zweiten Mobilfunkvermittlungsstelle eines zweiten Mobilfunksystems, bei dem die Mobilfunkvermittlungsstellen über eine Schnittstelle miteinander verbunden werden, über die Nutzdaten mit einer veränderbaren Nutzdatenübertragungsrate übertragen werden, bei dem die Nutzdaten innerhalb von Datenrahmen übertragen werden, die eine fest vorgegebene Anzahl von Datenfeldern umfassen, wobei zunächst entsprechend der Menge der zu übertrogenen Nutzdaten zumindest ein Teil der Datenfelder mit den Nutzdoten beschrieben wird und anschließend der übrige Teil der Datenfelder mit Füllbits beschrieben wird, und bei dem jeweils zwei aufeinanderfolgende Datenrahmen *zu einem Doppel-Datenrahmen mit einer doppelten Anzahl von Datenfeldern* zusammengefasst werden, indem in die Datenrahmen jeweils ein Kennungsbit eingetragen wird und *auf logisch Null oder EINS gesetzt wird, wodurch das jeweilige Kennungsbit* angibt, ob es sich um den ersten oder den zweiten der beiden Datenrahmen handelt.

Außerdem wird eine Mobilfunkvermittlungsstelle für ein Mobilfunksystem mit einer Schnittstellenschaltung vorgeschlagen, die Nutzdaten mit einer anderen Mobilfunkvermittlungsstelle eines anderen Mobilfunksystems austauscht, indem die Schnittstellenschaltung die Nutzdaten mit einer veränderbaren Nutzdatenübertragungsrate innerhalb von Datenrahmen sendet und empfängt, wobei jeder Datenrahmen eine fest vorgegebene Anzahl von Datenfeldern umfasst, von denen entsprechend der Menge der zu übertragenen Nutzdaten zumindest ein Teil mit den Nutzdaten beschrieben ist und der übrige Teil mit Füllbits beschrieben ist, und wobei die Schnittstellenschaltung jeweils zwei aufeinanderfolgende Datenrahmen *zu einem Doppel-Datenrahmen mit einer doppelten Anzahl von Datenfeldern* zusammenfasst und aussendet, indem die Schnittstellenschaltung in die Datenrahmen jeweils ein Kennungsbit einträgt und *auf logisch Null oder EINS setzt, wodurch das jeweilige Kennungsbit* angibt, ob es sich um den ersten oder den zweiten der beiden Datenrohmen handelt.

Es wird auch eine Schnittstellenschaltung für eine Mobilfunkvermittlungsstelle eines Mobilfunksystems vorgeschlagen, die Nutzdaten mit einer anderen Mobilfunkvermittlungsstelle eines anderen Mobilfunksystems austauscht, indem die Schnittstellenschaltung die Nutzdaten mit einer veränderbaren Nutzdatenübertragungsrate innerhalb von Datenrahmen sendet und empfängt, wobei jeder Datenrahmen eine fest vorgegebene Anzahl von Datenfeldern umfasst, von denen entsprechend der Menge der zu übertragenen Nutzdaten zumindest ein Teil mit den Nutzdaten beschrieben ist und der übrige Teil mit Füllbits beschrieben ist, und wobei die Schnittstellenschaltung jeweils zwei aufeinanderfolgende Datenrahmen *zu einem Doppel-Datenrahmen mit einer doppelten Anzahl von Datenfeldern* zusammenfasst und aussendet, indem die Schnittstellenschaltung in die Datenrahmen jeweils ein Kennungsbit einträgt *und auf logisch Null oder EINS setzt, wodurch das jeweilige Kennungsbit* angibt, ob es sich um den ersten oder den zweiten der beiden Datenrohmen handelt.

Durch die erfindungsgemäßen Maßnahmen wird erreicht, dass die Mobilfunkvermittlungsstellen der verschiedenen Mobilfunksysteme Nutzdaten mit einer variablen Nutzdatenübertragungsrate, d.h. mit einer variablen Netto-Übertragungsrate, austauschen können, wobei jedoch Datenrahmen mit einer fest vorgegebenen Anzahl von Datenfeldern verwendet werden. Dadurch wiederum wird zwischen den Mobilfunkvermittlungsstellen eine Verbindung mit einer durch die Anzahl der Datenfelder bestimmten, festen Brutto-Übertragungsrate hergestellt. Diese Verbindung kann mit einer leitungsorientierten Vermittlungstechnik geschaltet werden, wodurch auch einfachere und zumeist ältere Mobilfunkvermittlungsstellen einsetzbar sind. Durch das Auffüllen der Datenfelder entweder mit den zu übertragenen Nutzdaten oder mit Füllbits, wird der Datenrahmen nur soweit mit Nutzlast (payload) gefüllt, wie es die momentane Nutzdatenübertragungsrate erforderlich macht. Damit wird eine Verbindung mit einer variablen Netto-Übertragungsrate hergestellt, die ohne besonderen Aufwand an eine paketorientierte Vermittlungstechnik, wie sie in modernen Mobilfunkvermittlungsstelle eingesetzt wird, angepaßt werden kann. Dadurch dass jeweils zwei aufeinanderfolgende Datenrahmen zusammengefasst werden, indem in die Datenrahmen jeweils ein Kennungsbit eingetragen wird, das angibt, ob es sich um den ersten oder den zweiten der beiden Datenrahmen handelt, werden Doppel*rahmen* mit einer größeren Anzahl von beschreibbaren Datenfeldern gebildet, wodurch ein größerer Umfang für die Veränderung der Netto-Übertragungsrate gegeben ist.

Die Erfindung ist besonders geeignet für das Weiterreichen (auch "handover" genannt) eines drahtlosen Teilnehmerendgerätes von einem Mobilfunksystem zu einem anderen, insbesondere für ein Weiterreichen, bei dem zwischen leitungsorientierter und paketorientierter Vermittlungstechnik gewechselt wird.

Besonders vorteilhafte Ausgestaltungen der Erfindung ergeben sich aus den Unteransprüchen:

Ein besonderer Vorteil ergibt sich auch, wenn beginnend mit dem ersten Datenfeld des ersten Datenrahmens die Datenfelder der zusammengefassten Datenrahmen nacheinander mit den zu übertragenen Nutzdaten aufgefüllt werden und gegebenenfalls die übrig bleibenden Datenfelder mit den Füllbits aufgefüllt werden, und wenn die Anzeigenbits des ersten Datenrahmens zusammen mit den des zweiten Datenrahmens eine Adresse angeben, die diejenige Stelle markiert, bis zu der die zusammengefassten Datenrahmen mit den Nutzdaten aufgefüllt sind. Durch diese Maßnahmen werden die Nutzdaten in einen zusammenhängenden Datenblock geschrieben, dessen Anfang bekannt ist und dessen Ende durch die aufkommende Nutzdatenmenge bestimmt ist. Für den Zugriff auf die übertragenen Nutzdaten muß lediglich das Ende des Datenblocks durch die Anzeigebits markiert werden.

Außerdem ergibt sich ein besonderer Vorteil, wenn ein in dem ersten Mobilfunksystem betriebenes drahtloses Teilnehmerendgerät zu dem zweiten Mobilfunksystem weitergereicht wird, indem die von dem drahtlosen Teilnehmerendgerät gesendeten und empfangenen Nutzdaten über die Schnittstelle transparent übertragen werden, wobei die Anzeigebits, diejenigen Datenfelder angeben, die mit den zu übertragenen Nutzdaten beschrieben sind und/oder die diejenigen Datenfelder angeben, die mit Füllbits beschrieben sind. Durch diese Maßnahmen ist ein schelles Weiterreichen von einem System mit leitungsorientierter Vermittlungstechnik zu einem System mit paketorientierter Vermittlungstechnik möglich.

Ein weiterer Vorteil ergibt sich, wenn ein in dem zweiten Mobilfunksystem betriebenes drahtloses Teilnehmerendgerät zu dem ersten Mobilfunksystem weitergereicht wird, indem die von dem drahtlosen Teilnehmerendgerät gesendeten und empfangenen Nutzdaten über die Schnittstelle nicht-transparent und nach einem aus verschiedenen Sicherungsmechanismen wählbaren Sicherungsmechanismus übertragen werden, und wenn in den Datenrahmen Steuerungsbits eingetragen werden, die den gewählten Sicherungsmechanismus angeben, wonach die Datenfelder des Datenrahmens mit den Nutzdaten beschrieben werden. Durch diese Maßnahmen ist ein schelles Weiterreichen von einem System mit paketorientierter Vermittlungstechnik zu einem System mit leitungsorientierter Vermittlungstechnik möglich.

Die Erfindung wird nun anhand von Ausführungsbeispielen näher beschrieben, wobei auf folgende schematischen Zeichnungen Bezug genommen wird:
- Fig. 1,: die zwei miteinander verbundene Mobilfunksysteme und ein Teilnehmerendgerät zeigt, das weitergereicht wird;
- Fig. 2,: die das Ablaufdiagramm eines erfindungsgemäßes Verfahrens für eine Datenübertragung während des Weiterreichens zeigt;
- Fig. 3a/b,: die den Aufbau eines Doppel-Datenrahmens für eine transparente Datenübertragung zeigt;
- Fig. 4,: die den Aufbau eines Datenrahmens für eine nicht-transparente
Datenübertragung zeigt.

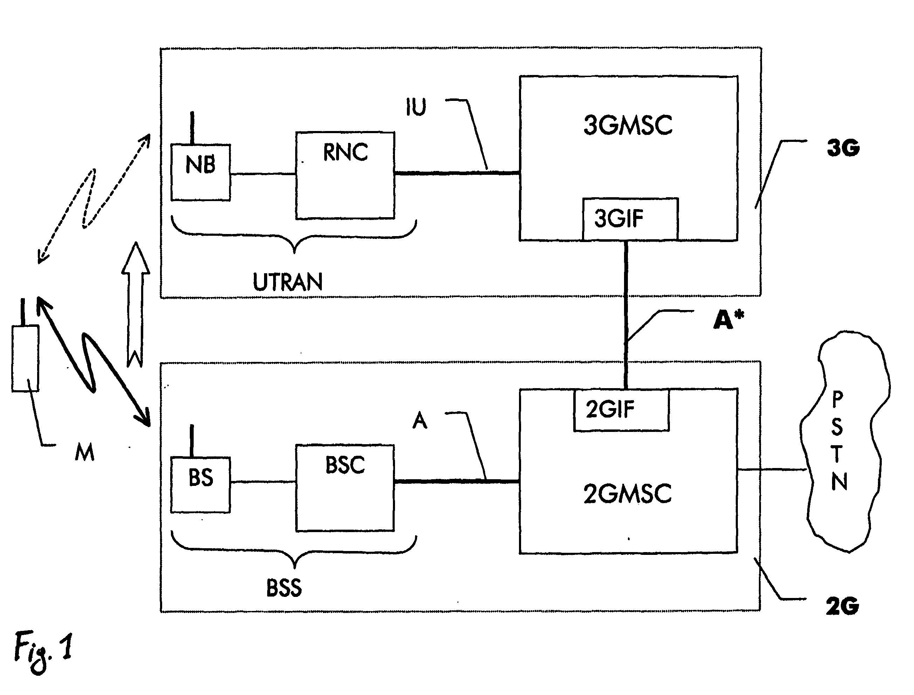

Die Figur 1 zeigt ein erstes und ein zweites Mobilfunksystem 2G bzw. 3G, die über eine erfindungsgemäße Schnittstelle A* mitaneinander verbunden sind. Außerdem zeigt die Figur 1 ein drahtloses Teilnehmerendgerät M, das multi-mode-fähig ist und das zunächst von dem ersten Mobilfunksystem 2G versorgt wird und dann zu dem zweiten Mobilfunksystem 3G weitergereicht wird. Das erste Mobilfunksystem 2G ist in diesem Beispiel ein nach dem GSM-Standard aufgebautes Mobilfunksystem mit Funkfeststationen BS, daran angeschlossenen Funkfeststationssteuerungen BSC und daran angeschlossenen Mobilfunkvermittlungsstellen 2GMSC. Zur Vereinfachung ist von diesen Einrichtungen hier beispielhaft jeweils nur eine dargestelltt.

Die Funkfeststation BS und die Funkfeststationssteuerung BSC bilden das sogenannte Basisstationssubsystem BSS, welches über eine Schnittstelle A mit der Mobilfunkvermittlungsstelle 2GMSC verbunden ist. Diese wiederum stellt die Verbindung zu dem öffentlichen Telekommunikationsnetz PSTN her, wobei eine vorwiegend leitungsorientierte Vermittlungstechnik eingesetzt wird.

Das in Figur 1 dargestellte zweite Mobilfunksystem 3G ist ein nach dem UMTS-Standard aufgebautes Mobilfunksystem mit Funkfeststationen NB, daran angeschlossenen Funknetzwerksteuerungen RNC und damit verbundenen Mobilfunkvermittlungsstellen 3GMSC. Von diesen Einrichtungen ist hier beispielhaft jeweils nur eine dargestellt.

Die Funkfeststation NB bildet zusammen mit der Funknetzwerksteuerung RNC das Untersystem UTRAN, welches über eine Schnittstelle IU mit der Mobilfunkvermittlungsstelle 3GMSC verbunden ist. Diese wiederum kann eine Verbindung zu dem öffentlichen Telekommunikationsnetz herstellen, wobei vorwiegend auf paketorientierte Vermittlungstechnik zurückgegriffen wird. Auf der Schnittstelle IU wird eine paketorientierte Datenübertragung nach dem sogenannten AAL2 (ATM adaptation layer2) durchgeführt.

Die beiden Mobilfunksysteme sind nun über eine erfindungsgemäße Schnittstelle A* miteinander verbunden. Dazu verfügt die erste Mobilfunkvermittlungsstelle 2GMSC über eine Schnittstellenschaltung 2GIF und die zweite Mobilfunkvermittlungsstelle 3GMSC über eine Schnittstellenschaltung 3GIF. Beide Schnittstellenschaltungen sind über eine 64 kbit/s-Leitung miteinander verbunden.

Gemäß dem später noch näher beschriebenen erfindungsgemäßen Verfahren werden Daten zwischen den beiden Mobilfunksystem übertragen. Die ist insbesondere dann der Fall, wenn das drahtlose Teilnehmerendgerät M von dem einen Mobilfunksystem 2G oder 3G zu dem anderen 3G bzw. 2G weitergereicht werden soll.

In Figur 1 ist schematisch das Weiterreichen des drahtlosen Teilnehmerendgerätes M von dem ersten Mobilfunksystem 2G zu dem zweiten Mobilfunksystem 3G dargestellt. Das Teilnehmerendgerät M befindet sich zunächst in Funkverbindung mit dem ersten Mobilfunksystem 2G. Über die erste Mobilfunkvermittlungsstelle 2GMSC ist eine Verbindung zu dem öffentlichen Telekommunikationsnetz PSTN hergestellt. Wechselt nun das Teilnehmergerät M von dem Versorgungsbereich des ersten Mobilfunksystems 2G zu dem Versorgungsbereich des zweiten Mobilfunksystems 3G, so soll die Verbindung zu dem öffentlichen Telekommunikationsnetz PSTN bestehen bleiben. Die erste Mobilfunkvermittlungsstelle 2GMSC hat daher die Funktion einer sogenannten "Anker-MSC".

Das Weiterreichen betrifft also eine zwischen dem drahtlosen Teilnehmerendgerät M und einem Teilnehmerendgerät des öffentlichen Telekommunikationsnetztes PSTN aufgebaute Ende-zu-Ende-Verbindung. Diese wird nach dem Weiterreichen dann über die zweite Mobilfunkvermittlungsstelle 3GMSC und über die Verbindung A* zu der ersten Mobilfunkvermittlungsstelle 2GMSC geführt, die mit dem öffentlichen Telekommunikationsnetz PSTN verbunden bleibt.

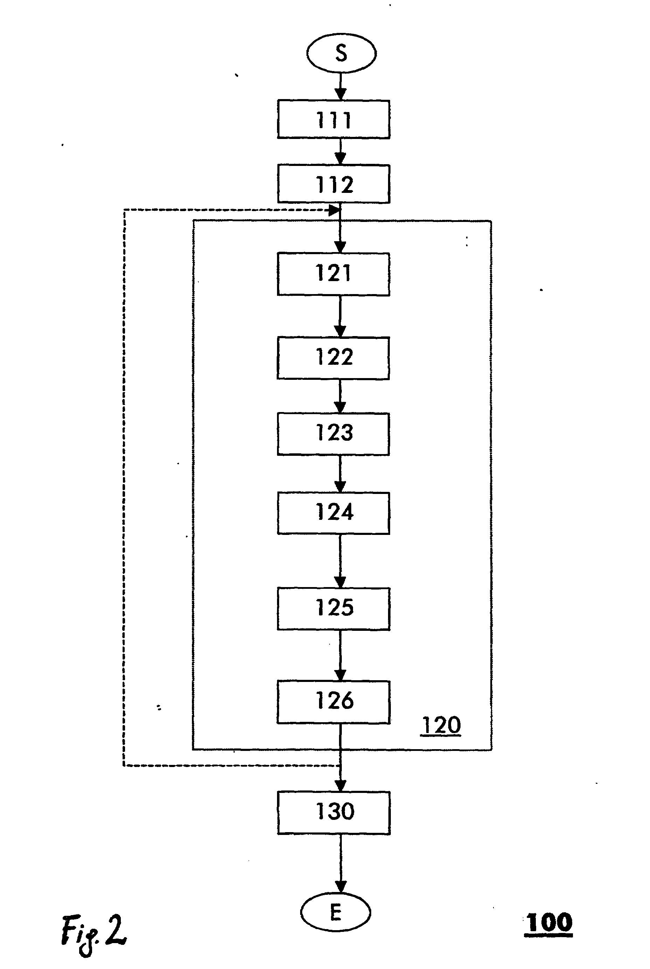

Zu diesem Zweck werden die Daten, insbesondere die von dem Teilnehmerendgerät M empfangenen und gesendeten Nutzdaten nun nach dem in Figur 2 näher beschriebenen Verfahren über die Schnittstelle A* übertragen:

Die Figur 2 zeigt ein Ablaufdiagramm für das erfindungsgemäße Verfahren zur Datenübertragung zwischen den beiden in der Fig. 1 dargestellten Mobilfunksystemen 2G und 3G. Das Verfahren 100 enthält die Schritte 111 bis 130. Nach dem Start S des Verfahrens wird ein erster Schritt 111 durchgeführt, bei dem die erste Mobilfunkvermittlungsstelle 2GMSC eine Verbindung über A* zu der zweiten Mobilfunkvermittlungsstelle aufbaut, die wiederum eine Verbindung zu der neuen Funknetzwerksteuerung RNC aufbaut. Damit sind zunächst Signalisierungskanäle geschaltet, über die das Teilnehmerendgerät M eine neue Verbindung mit dem zweiten Mobilfunksystem 3G aufnehmen kann, um sich dort zu registrieren. Nach eine erfolgreichen Registrierung wird in einem nächsten Schritt 112 die Verbindung zwischen der ersten Mobilfunkvermittlungsstelle und der Funkfeststationssteuerung BSC getrennt, damit die Nutzdatenübertragung nun über das zweite Mobilfunksystem 3G und die Schnittstelle A* erfolgt. Die Nutzdatenübertragung erfolgt in einem nächsten Schritt 120, der sich in die Teilschritte 121 bis 126 aufteilt:

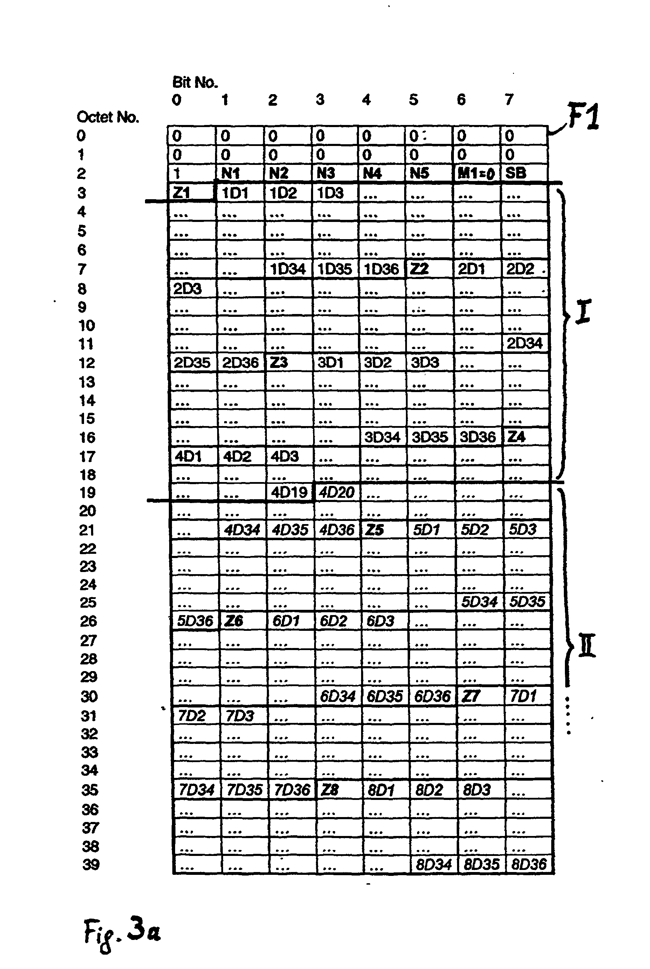

Zur Datenübertragung werden die in den Figuren 3a und 3b dargestellten Datenrahmen für F1 und F2 verwendet. Daher wird im folgenden auch auf diese Figuren Bezug genommen. In dem ersten Teilschritt 121 werden Doppelrahmen gebildet, die sich aus je zwei Datenrahmen F1 und F2 zusammensetzen. Jeder Datenrahmen enthält ein Kopffeld, in dem Anzeigebits N1, N2 ... und Kennungsbits M1, SB eingetragen sind. Ein Doppelrahmen wird nun dadurch gebildet, dass in dem ersten Rahmen F1 das Kennungsbit M1 auf logisch NULL gesetzt wird und in dem zweiten Datenrahmen F2 das Kennungsbit M1 auf logisch EINS gesetzt wird. Damit zeigt das Kennungsbit an, ob es sich um den ersten oder zweiten Datenrahmen handelt. Außerdem werden die Anzeigebits N1 bis N5 des ersten Datenrahmens F1 zusammen mit den Anzeigebits N6 bis N10 des zweiten Datenrahmens F2 zu einem 10-wertigen Datenwort zusammengefaßt, das einer Adresse entspricht. Die Funktion dieser Adresse wird anhand des Teilschritts 124 noch näher beschrieben.

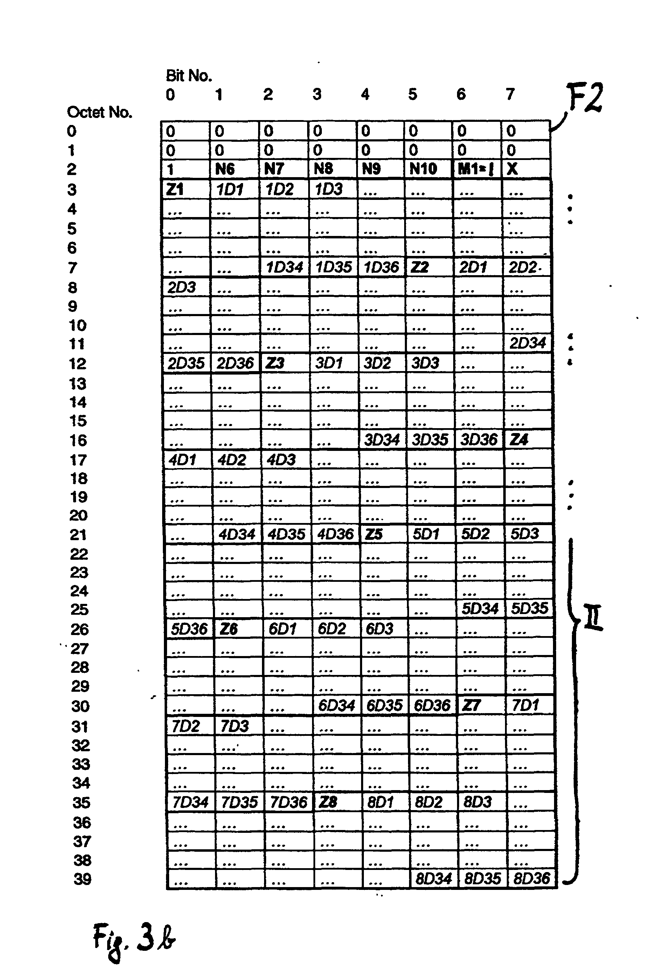

Im nächsten Teilschritt 122 werden nun die Datenfelder des Doppelrahmens mit Nutzdaten aufgefüllt, wobei mit dem ersten Datenfeld 1D1 des ersten Datenrahmens F1 begonnen wird. Da jeder der beiden Datenrahmen F1 und F2 die Datenfelder 1D1 bis 8D36 enthält, die 288 Bits umfassen, sind also insgesamt 2x288 Bit = 576 Bit vorhanden. Die Datenfelder werden mit den Nutzdatenbits aufgefüllt. In diesem Beispiel nach Figur 3a werden lediglich die Datenfelder 1D1 bis einschließlich 4D19 aufgefüllt, so dass sich ein zusammenhängender Nutzdatenblock I mit insgesamt (3x36+19) Bits = 127 Bits ergibt. An diesen Nutzdatenblock I schließt sich der aus den übrigen Datenfeldern bestehende Block II an, für den keine Nutzdatenbits mehr zur Verfügung stehen. Der in Figur 3 gezeigte Doppelrahmen ist demnach lediglich zu 127/576 = 22 % mit Nutzdaten ausgelastet. Bezogen auf die Bruttomenge von 640 Bit pro Doppelrahmen beträgt der Wert nur 127/640 = 19,8%. Diese Auslastung kann jedoch veränderbar an die erforderliche Nutzdatenübertragungsrate angepaßt werden.

In dem nächsten Teilschritt 123 wird der Block II mit Füllbits aufgefüllt. Damit sind alle Datenfelder innerhalb des Doppelrahmens beschrieben.

In einem nächsten Teilschritt 124 werden nun die Anzeigebits N1 bis N10 gesetzt, so dass sie die Adresse für das Datenfeld D4D19 innerhalb des ersten Datenrahmens F1 angeben. Die Adresse markiert demnach das Ende des Nutzdatenblockes I. Aufgrund dieser Adressierung kann ein Empfänger, der den Doppelrahmen empfängt, sofort auf die dort gespeicherten Nutzdaten zugreifen.

Im Vergleich mit den aus dem GSM-Standard bekannten sogenannten A-TRAU-Rahmen ist die Struktur der hier gezeigten Datenrahmen F1 und F2 anders. Im Gegensatz zu den A-TRAU-Rahmen haben sind die hier gezeigten Rahmen nur soweit wie nötig mit Nutzdatenbits aufgefüllt. Die hier beschriebene N1 bis N10 Bits haben dabei die Funktion eines "Füllstandsanzeigers". Jeder Rahmen kann flexibel von 0 bis 288 Bit mit Nutzdaten aufgefüllt werden. Außerdem werden aufgrund des variablen Auffüllens keine Taktbits wie im GSM benötigt, keine sogenannten NIC bits (network independent clocking). Darüberhinaus werden die hier beschriebenen Doppelrahmen sowohl für die transparente als auch für die nicht-ttransparente Datenübertragung eingesetzt. Zur Unterscheidung von der A-TRAU-Rahmenstruktur soll die hier beschriebene neue Rahmenstruktur mit "A-TRAU*" bezeichnet werden.

In dem Teilschritt 125 wird nun der Doppelrahmen über die in Figur 1 dargestellte Schrittstelle A* gesendet. Aufgrund der festen Anzahl der vorhandenen Datenfelder, hier 288 Bits pro Rahmen, ist auch die Bruttoübertragungsrate fest vorgegeben. Sie beträgt hier 64 kbit/s. Demnach werden pro Sekunde 100 Doppelrahmen zu jeweils 640 Bits übertragen. Aufgrund des bedarfsorientierten Auffüllens der Datenfelder mit Nutzdaten wird eine flexible Netto-Übertragungsrate erreicht, die zwischen 0 und 57,6 kbit/s liegen kann.

In einem nächsten Teilschritt 126 wird der Doppelrahmen F1 + F2 von einem Empfänger empfangen, der aufgrund der Anzeigebits N1 bis N10 sofort erkennt, wie groß der Nutzdatenblock list. Der Empfänger kann demnach sofort auf die Nutzdaten zugreifen. Die Füllbits werden verworfen. Damit ist die Übertragung eines Doppelrahmens entsprechend dem Teilschritt 120 in dem erfindungsgemäßen Verfahren 100 abgeschlossen. Dieser Schritt wird für jeden weiteren Doppelrahmen wiederholt durchgeführt, so lange, bis keine Nutzdaten mehr übertragen werden sollen und die Verbindung getrennt werden soll.

Dann wird in einem Schritt 130 die Verbindung von dem Teilnehmerendgerät M mit dem zweiten Mobilfunksystem 3G getrennt. Das Verfahren ist somit beendet.

Das in der Figur 2 dargestellte Verfahren bezieht sich auf das Weiterreichen des Teilnehmerendgerätes von dem ersten Mobilfunksystem 2G zum zweiten Mobilfunksystem 3G.

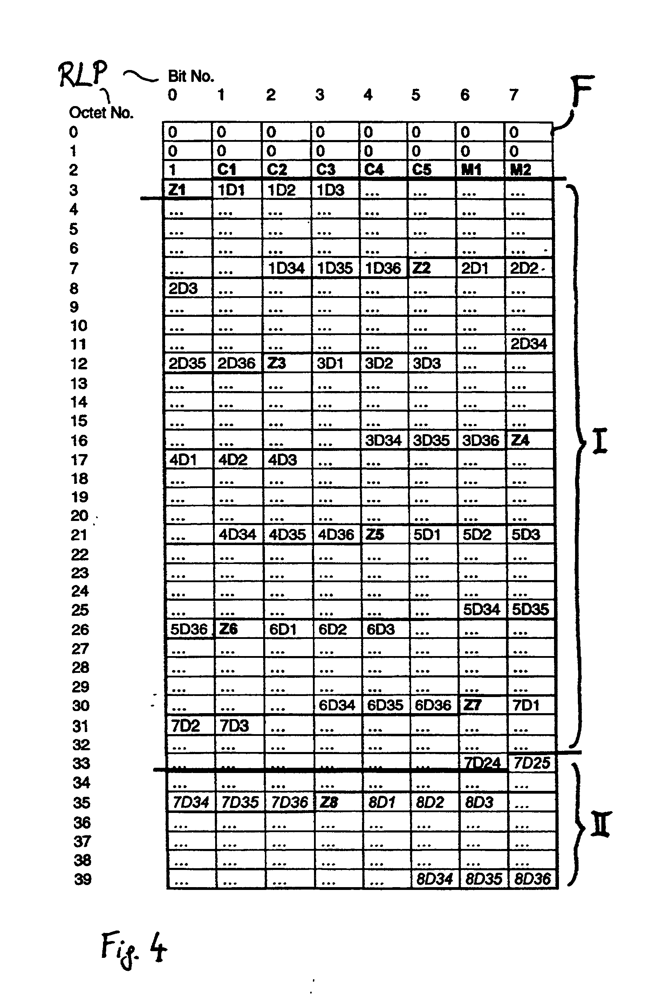

Als weiteres Ausführungsbeispiel zeigt die Figur 4 den Datenrahmen F für die Datenübertragung auf der erfindungsgemäßen Schnittstelle A* während des Weiterreichens des Teilnehmerendgerätes von dem zweiten Mobilfunksystem 3G zu dem ersten Mobilfunksystem 2G. In diesem Falle werden die Nutzdaten nun nach einem anderen Schema in den Datenrahmen geschrieben. Der Datenrahmen F enthält dazu Steuerungsbits C1 bis C4, die in das Kopffeld des Datenrahmens eingetragen sind und die ein bestimmtes Sicherungsschema angeben. Das hier verwendete Sicherungsschema ist das nach dem GSM-Standard genannte "radio link protocol", kurz RLP genannt. Nach diesem Protokol werden sogenannte RLP-Rahmen mit 576 Bits oder mit 240 Bits übertragen. Für die Übertragung eines langen RLP-Rahmens werden zwei Einzelrahmen á 288 Bits vollkommen aufgefüllt. Bei einem kurzen Rahmen mit 240 Bit Länge wird lediglich ein Einzelrahmen zum Teil aufgefüllt.

Die Kontrollbits C1 bis C4 zeigen nun an, welches der beiden Sicherungsmechanismen verwendet werden. In diesem Beispiel wird das RLP-Protokoll (auf dem OSI-Layer 2) verwendet, d.h. die Datenfelder 1D1 bis 7D24 sind mit 240 Nutzdatenbits beschrieben. Diese Datenfelder bilden den ersten Datenblock I. Die restlichen Datenfelder 7D25 bis 8D36 sind mit Füllbits beschrieben und bilden den zweiten Datenblock II. Durch diese Maßnahmen ist es möglich einen Sicherungsmechanismus nach dem RLP-Protokoll mit einer Rahmenlänge von 240 Bits für die nicht-transparente Datenübertragung zu verwenden. Außerdem ist es möglich, das RLP-Protokoll mit einer Rahmenlänge von 576 Bits als Sicherungsmechanismus zu verwenden, wobei zwei aufeinander folgende Rahmen mit jeweils 576 Bits Nutzdaten beschrieben werden.

Welches der verschiedenen Sicherungsmechanismen verwendet wird, zeigen die Steuerungsbits C1 bis C4 an. Die gewählte Art des Sicherungsmechanismus nach dem RLP-Protokoll, d.h. die gewählte Läge der RLP-Rahmen, ist abhängig von dem auf dem physikalischen Layer (OSI-Layer1) verwendeten Protokoll. Dort wird entweder das sogenannte V.110-Protokoll oder das A-TRAU-Protokoll verwendet. Die Steuerungsbits C1 bis C4 werden entsprechend gesetzt. Das zusätzliche C5 Bit ist für die Fehlererkennung reserviert.

Die Datenübertragung wird im wesentlichen von den beiden in der Figur 1 dargestellten Schnittstellenschaltungen 2GIF und 3GIF durchgeführt. Im Falle eines Weiterreichens (auch "handover" genannt) von dem ersten System 2G zu dem zweiten System 3G ist die Schnittstelle 2GIF in Form einer sogenannten interworking function (IWF) ausgeführt. Die andere Schnittstelle 3GIF befindet sich im wesentlichen in einem transcoder (TC).

Die Erfindung ist jedoch nicht nur auf das Weiterreichen von einem multimode-fähigen drahtlosen Teilnehmerendgerät beschränkt. Vielmehr können das erfindungsgemäße Verfahren und die Vorrichtungen für jede Art von Datenübertragung zwischen den verschiedenen Systemen eingesetzt werden.

## Patentansprüche

1. Verfahren (100) zur Datenübertragung zwischen einer ersten Mobilfunkvermittlungsstelle (2GMSC) eines ersten Mobilfunksystems (2G) und einer zweiten Mobilfunkvermittlungsstelle (3GMSC) eines zweiten Mobilfunksystems (3G), bei dem die Mobilfunkvermittlungsstellen (2GMSC, 3GMSC) über eine Schnittstelle (A*) miteinander verbunden werden (110), über die Nutzdaten mit einer veränderbaren Nutzdatenübertragungsrate übertragen werden, bei dem die Nutzdaten innerhalb von Datenrahmen (F1, F2) übertragen werden (120), die eine fest vorgegebene Anzahl von Datenfeldern (1D1...1D36; 2D1...2D36; .... ; 8D1...8D36) umfassen, wobei zunächst entsprechend der Menge der zu übertragenen Nutzdaten zumindest ein Teil (1D1 .... 4D19) der Datenfelder mit den Nutzdaten beschrieben wird (122) und anschließend der übrige Teil (4D20 .... 8D36) der Datenfelder mit Füllbits beschrieben wird (123), und bei dem jeweils zwei aufeinanderfolgende Datenrahmen (F1, F2) *zu einem Doppel-Datenrahmen mit einer doppelten Anzahl von Datenfeldern* zusammengefasst werden (121), indem in die Datenrahmen (F1, F2) jeweils ein Kennungsbit (M1) eingetragen wird *und auf logisch Null oder EINS gesetzt wird, wodurch das jeweilige Kennungsbit* (M1) angibt, ob es sich um den ersten (F1) oder den zweiten (F2) der beiden Datenrahmen handelt.

2. Verfahren (100) nach Anspruch 1, bei dem in jeden Datenrahmen (F1) Anzeigebits (N1, N2, ...) eingetragen werden (124), die den Teil (1D1 .... 4D19) der Datenfelder angeben, der mit den zu übertragenen Nutzdaten beschrieben wird, und/oder den übrigen Teil (4D20 .... 8D36) der Datenfelder angeben, der mit den Füllbits beschrieben wird.

3. Verfahren (100) nach Anspruch 2, bei dem beginnend mit dem ersten Datenfeld (1D1) die Datenfelder nacheinonder mit den zu übertragenen Nutzdaten aufgefüllt werden (122) und gegebenenfalls die übrig bleibenden Datenfelder (4D20 .... 8D36) mit den Füllbits aufgefüllt werden (123), bei dem jeder Datenrahmen (F1) ein Kopffeld enthält, in das die Anzeigebits (N1, N2, ...) eingetragen werden (124), die eine Adresse angeben, die diejenige Stelle innerhalb des Datenrahmens (F1) markiert, bis zu der der Datenrohmen (F1) mit den Nutzdaten aufgefüllt wird.

4. Verfahren (100) nach Anspruch 3, bei dem beginnend mit dem ersten Datenfeld (1D1) des ersten Datenrahmens (F1) die Datenfelder der zusammengefassten Datenrahmen (F1, F2) nacheinander mit den zu übertragenen Nutzdaten aufgefüllt werden (122) und gegebenenfalls die übrig bleibenden Datenfelder mit den Füllbits aufgefüllt werden (123), und bei dem die Anzeigenbits (N1, N2, ...) des ersten Datenrahmens (F1) zusammen mit den Anzeigebits (N6, N7, ...) des zweiten Datenrahmens (F2) eine Adresse angeben, die diejenige Stelle markiert, bis zu der die zusammengefassten Datenrahmen (F1, F2) mit den Nutzdaten aufgefüllt werden.

5. Verfahren (100) nach Anspruch 1, bei dem ein in dem ersten Mobilfunksystem (2G) betriebenes drahtloses Teilnehmerendgerät (M) zu dem zweiten Mobilfunksystem (3G) weitergereicht wird, indem die von dem drahtlosen Teilnehmerendgerät (M) gesendeten und empfangenen Nutzdaten über die Schnittstelle (A*) transparent und innerhalb der Datenrahmen (F1, F2) übertragen werden (120), wobei die Anzeigebits (N1, N2, ...) diejenigen Datenfelder (1D1 .... 4D19) angeben, die mit den zu übertragenen Nutzdaten beschrieben werden, und/oder diejenigen Datenfelder (4D20 .... 8D36) angeben, die mit den Füllbits beschrieben werden.

6. Verfahren nach Anspruch 1, bei dem ein in dem zweiten Mobilfunksystem (3G) betriebenes drohtloses Teilnehmerendgerät (M) zu dem ersten Mobilfunksystem (2G) weitergereicht wird, indem die von dem drahtlosen Teilnehmerendgerät (M) gesendeten und empfangenen Nutzdaten über die Schnittstelle (A*) nicht-transparent und nach einem aus verschiedenen Sicherungsmechanismen wählbaren Sicherungsmechanismus (RLP) übertragen werden, bei dem in den Datenrahmen (F) Steuerungsbits (C1, C2, ...) eingetragen werden, die den gewählten Sicherungsmechanismus (V110) angeben, und bei dem die Datenfelder (1D1 ... 8D36) des Datenrahmens (F) entsprechend diesem gewählten Sicherungsmechanismus (RLP) mit den Nutzdaten beschrieben werden.

7. Mobilfunkvermittlungsstelle (2GMSC) für ein erstes Mobilfunksystem (2G) mit einer Schnittstellenschaltung (2GIF), die so ausgestattet ist, daß sie Nutzdaten mit einer zweiten Mobilfunkvermittlungsstelle (3GMSC) eines zweiten Mobilfunksystems (3G) austauscht, indem die Schnittstellenschaltung (2GIF) die Nutzdaten mit einer veränderbaren Nutzdatenübertragungsrate innerhalb von Datenrahmen (F1, F2) sendet und empfängt, wobei jeder Datenrahmen (F1) eine fest vorgegebene Anzahl von Datenfeldern (1D1...1D36; 2D1...2D36;....; 8D1 ...8D36) umfasst, von denen entsprechend der Menge der zu übertragenen Nutzdaten zumindest ein Teil (1D1 .... 4D19) mit den Nutzdaten beschrieben ist und der übrige Teil (4D20 .... D36) mit Füllbits beschrieben ist, und wobei die Schnittstellenschaltung (2GIF) jeweils zwei aufeinanderfolgende Datenrahmen (F1, F2) empfängt, die *zu einem Doppel-Datenrahmen mit einer doppelten Anzahl von Datenfeldern* zusammengefasst sind und in die jeweils ein Kennungsbit (M1) eingetragen ist, das *auf logisch NULL oder EINS gesetzt ist, wodurch das jeweilige Kennungsbit (M1)* angibt, ob es sich um den ersten (F1) oder den zweiten (F2) der beiden Datenrahmen handelt.

8. Mobilfunkvermittlungsstelle (3GMSC) für ein zweites Mobilfunksystem (3G) mit einer Schnittstellenschaltung (3GIF), die so ausgestattet ist, daß sie Nutzdaten mit einer ersten Mobilfunkvermittlungsstelle (2GMSC) eines ersten Mobilfunksystems (2G) austauscht, indem die Schnittstellenschaltung (3GIF) die Nutzdaten mit einer veränderbaren Nutzdatenübertragungsrate innerhalb von Datenrahmen (F1, F2) sendet und empfängt, wobei jeder Datenrahmen (F1) eine fest vorgegebene Anzahl von Datenfeldern (1D1...1D36; 2D1...2D36; .... ; 8D1...8D36) umfasst, von denen entsprechend der Menge der zu übertragenen Nutzdaten zumindest ein Teil (1D1 .... 4D19) mit den Nutzdaten beschrieben ist und der übrige Teil (4D20 .... 8D36) mit Füllbits beschrieben ist, und wobei die Schnittstellenschaltung (3GIF) jeweils zwei aufeinanderfolgende Datenrahmen (F1, F2) *zu einem Doppel-Datenrahmen mit einer doppelten Anzahl von Datenfeldern* zusammenfasst und aussendet, indem die Schnittstellenschaltung (3GIF) in die Datenrahmen (F1, F2) jeweils ein Kennungsbit (M1) einträgt *und auf logisch NULL oder EINS setzt, wodurch das jeweilige Kennungsbit (M1)* angibt, ob es sich um den ersten (F1) oder den zweiten (F2) der beiden Datenrahmen handelt.

9. Schnittstellenschaltung (2GIF) für eine Mobilfunkvermittlungsstelle (2GMSC) eines ersten Mobilfunksystems (2G), die so ausgestattet ist, daß sie Nutzdaten mit einer zweiten Mobilfunkvermittlungsstelle (3GMSC) eines zweiten Mobilfunksystems (3G) austauscht, indem die Schnittstellenschaltung (2GIF) die Nutzdaten mit einer veränderbaren Nutzdatenübertragungsrate innerhalb von Datenrohmen (F1, F2) sendet und empfängt, wobei jeder Datenrahmen (F1) eine fest vorgegebene Anzahl von Datenfeldern (1D1...1D36; 2D1...2D36; .... ; 8D1...8D36) umfasst, von denen entsprechend der Menge der zu übertragenen Nutzdaten zumindest ein Teil (1D1 .... 4D19) mit den Nutzdaten beschrieben ist und der übrige Teil (4D20 .... 8D36) mit Füllbits beschrieben ist, und wobei Schnittstellenschaltung (2GIF) jeweils zwei aufeinanderfolgende Datenrahmen (F1, F2) empfängt, die *zu einem Doppel-Datenrahmen mit einer doppelten Anzahl von Datenfeldern* zusammengefasst sind und in die jeweils ein Kennungsbit (M1) eingetragen ist, das *auf logisch NULL oder EINS gesetzt ist, wodurch das jeweilige Kennungsbit (M1)* angibt, ob es sich um den ersten (F1) oder den zweiten (F2) der beiden Datenrahmen handelt.

10. Schnittstellenschaltung (3GIF) für eine Mobilfunkvermittlungsstelle (3GMSC) eines zweiten Mobilfunksystems (3G), die so ausgestattet ist, daß sie Nutzdaten mit einer ersten Mobilfunkvermittlungsstelle (2GMSC) eines ersten Mobilfunksystems (2G) austauscht, indem die Schnittstellenschaltung (3GIF) die Nutzdaten mit einer veränderbaren Nutzdatenübertragungsrate innerhalb von Datenrahmen (F1, F2) sendet und empfängt, wobei jeder Datenrahmen (F1) eine fest vorgegebene Anzahl von Datenfeldern (1D1...1D36; 2D1...2D36;....; 8D1...8D36) umfasst, von denen entsprechend der Menge der zu übertragenen Nutzdaten zumindest ein Teil (1D1 .... 4D19) mit den Nutzdaten beschrieben ist und der übrige Teil (4D20 .... 8D36) mit Füllbits beschrieben ist, und wobei die Schnittstellenschaltung (3GIF) jeweils zwei aufeinanderfolgende Datenrahmen (F1, F2) *zu einem Doppel-Datenrahmen mit einer doppelten Anzahl von Datenfeldern* zusammenfasst und aussendet, indem die Schnittstellenschaltung (3GIF) in die Datenrahmen (F1, F2) jeweils ein Kennungsbit (M1) einträgt und *auf logisch NULL oder EINS setzt, wodurch das jeweilige Kennungsbit (M1)* angibt, ob es sich um den ersten (F1) oder den zweiten (F2) der beiden Datenrahmen handelt.

## Claims

1. A method (100) for data transmission between a first mobile switching centre (2GMSC) of a first wireless communication system (2G) and a second mobile switching centre (3GMSC) of a second wireless communication system (3G), in which the mobile switching centres (2GMSC, 3GMSC) are connected to each other (110) over an interface (A*), over which user data is transmitted with a modifiable user data transmission rate, in which method the user data is transmitted (120) within frames (F1, F2) containing a permanently predefined number of data fields (1D1 ... 1D36; 2D1 ... 2D36; ...; 8D1 ... 8D36), wherein first according to the quantity of user data to be transmitted, at least one part (1D1 ... 4D19) of the data fields is written with the user data (122) and then the other part (4D20 ... 8D36) of the data fields is written (123) with stuff bits, and in which method in each case two successive frames (F1, F2) are combined as a double frame with a doubled number of data fields (121), in that in each of the frames (F1, F2) an identification bit (M1) is entered and set to logical zero or ONE, so that the relevant identification bit (M1) indicates whether this is the first (F1) or the second (F2) of the two frames.

2. A method (100) according to Claim 1, in which in each frame (F1) indicator bits (N1, N2, ...) are entered (124), which specify the part (1D1 ... 4D19) of the data fields that is written with the user data to be transmitted, and/or the other part (4D20 ... 8D36) of the data fields that is written with the stuff bits.

3. A method (100) according to Claim 2, in which beginning with the first data field (1D1) the data fields are successively filled with the user data to be transmitted (122) and where applicable the remaining fields (4D20 ... 8D36) are filled (123) with the stuff bits, and in which each frame (F1) contains a header field in which the indicator bits (N1, N2, ...) are entered (124), which give an address that marks the point within the frame (F1) up to which the frame (F1) is filled with the user data.

4. A method (100) according to Claim 3, in which beginning with the first data field (1D1) of the first frame (F1), the data fields of the combined frames (F1, F2) are successively filled with the user data to be transmitted (122) and where applicable the remaining fields are filled (123) with the stuff bits, and in which the indicator bits (N1, N2, ...) of the first frame (F1) together with the indicator bits (N6, N7, ...) of the second frame (F2) give an address which marks the point up to which the combined frames (F1, F2) are filled with the user data.

5. A method (100) according to Claim 1, in which a wireless user station (M) operated in the first wireless communication system (2G) is handed over to the second wireless communication system (3G), in that the user data sent and received by the wireless user station (M) is transmitted over the interface (A*) transparently and within the frames (F1, F2), the indicator bits (N1, N2, ...) specifying the data fields (1D1 ... 4D19) that are written with the user data to be transmitted, and/or specifying the data fields (4D20 ... 8D36) that are written with the stuff bits).

6. A method according to Claim 1, in which a wireless user station (M) operated in the second wireless communication system (3G) is handed over to the first wireless communication system (2G), in that the user data sent and received by the wireless user station (M) is transmitted over the interface (A*) non-transparently and according to a security mechanism (RLP) selectable from various security mechanisms, in which control bits (C1, C2, ...) specifying the selected security mechanism (V110) are entered in the frame (F), and in which the data fields (1D1 ... 8D36) of the frame (F) are written with the user data according to this selected security mechanism (RLP).

7. A mobile switching centre (2GMSC) for a first wireless communication system (2G) with an interface circuit (2GIF), which is equipped such that it exchanges user data with a second mobile switching centre (3GMSC) of a second wireless communication system (3G), in that the interface circuit (2GIF) sends and receives the user data with a modifiable user data transmission rate within frames (F1, F2), each frame (F1) containing a permanently predefined number of data fields (1D1 ... 1D36; 2D1 ... 2D36; ...; 8D1 ... 8D36), of which according to the quantity of user data to be transmitted, at least one part (1D1 ... 4D19) is written with the user data and the other part (4D20 ... D36) is written with stuff bits, and the interface circuit (2GIF) in each case receiving two successive frames (F1, F2) which are combined as a double frame with a doubled number of data fields and in each of which an identification bit (M1) is entered, which is set to logical ZERO or ONE, so that the respective identification bit (M1) indicates whether this is the first (F1) or the second (F2) of the two frames.

8. A mobile switching centre (3GMSC) for a second wireless communication system (3G) with an interface circuit (3GIF), which is equipped such that it exchanges user data with a first mobile switching centre (2GMSC) of a first wireless communication system (2G), in that the interface circuit (3GIF) sends and receives the user data with a modifiable user data transmission rate within frames (F1, F2), each frame (F1) containing a permanently predefined number of data fields (1D1 ... 1D36; 2D1 ... 2D36; ...; 8D1 ... 8D36), of which according to the quantity of user data to be transmitted, at least one part (1D1 ... 4D19) is written with the user data and the other part (4D20 ... 8D36) is written with stuff bits, and the interface circuit (3GIF) in each case combining and transmitting two successive frames (F1, F2) as a double frame with a doubled number of data fields, in that the interface circuit (3GIF) enters an identification bit (M1) in each of the frames (F1, F2) and sets it to logical ZERO or ONE, so that the respective identification bit (M1) indicates whether this is the first (F1) or the second (F2) of the two frames.

9. An interface circuit (2GIF) for a mobile switching centre (2GMSC) of a first wireless communication system (2G) which is equipped such that it exchanges user data with a second mobile switching centre (3GMSC) of a second wireless communication system (3G), in that the interface circuit (2GIF) sends and receives the user data with a modifiable user data transmission rate within frames (F1, F2), each frame (F1) containing a permanently predefined number of data fields (1D1 ... 1D36; 2D1 ... 2D36; ...; 8D1 ... 8D36), of which according to the quantity of user data to be transmitted, at least one part (1D1 ... 4D19) is written with the user data and the other part (4D20 ... 8D36) is written with stuff bits, and the interface circuit (2GIF) in each case receiving two successive frames (F1, F2) which are combined as a double frame with a doubled number of data fields and in each of which an identification bit (M1) is entered, which is set to logical ZERO or ONE, so that the respective identification bit (M1) indicates whether this is the first (F1) or the second (F2) of the two frames.

10. An interface circuit (3GIF) for a mobile switching centre (3GMSC) of a second wireless communication system (3G) which is equipped such that it exchanges user data with a first mobile switching centre (2GMSC) of a first wireless communication system (2G), in that the interface circuit (3GIF) sends and receives the user data with a modifiable user data transmission rate within frames (F1, F2), each frame (F1) containing a permanently predefined number of data fields (1D1 ... 1 D36; 2D1 ... 2D36; ...; 8D1 ... 8D36), of which according to the quantity of user data to be transmitted, at least one part (1D1 ... 4D19) is written with the user data and the other part (4D20 ... 8D36) is written with stuff bits, and the interface circuit (3GIF) in each case combining and transmitting two successive frames (F1, F2) as a double frame with a doubled number of data fields, in that the interface circuit (3GIF) enters an identification bit (M1) in each of the frames (F1, F2) and sets it to logical ZERO or ONE, so that the respective identification bit (M1) indicates whether this is the first (F1) or the second (F2) of the two frames.

## Revendications

1. Procédé (100) pour la transmission de données entre un premier central de commutation de radiocommunication mobile (2GMSC) d'un premier système de radiocommunication mobile (2G) et un second central de commutation de radiocommunication mobile (3GMSC) d'un second système de radiocommunication mobile (3G), d'après lequel on relie (110) les centraux de commutation de radiocommunication mobile (2GMSC, 3GMSC) par une interface (A*) par l'intermédiaire de laquelle sont transmises des données utiles avec un débit de transmission de données utiles que l'on peut faire varier, d'après lequel les données utiles sont transmises (120) à l'intérieur de cadres de données (F1, F2) qui englobent un nombre prédéterminé fixe de champs de données (1D1...1D36 ; 2D1...2D36 ; ... ; 8D1...8D36), les données utiles étant tout d'abord inscrites (122), en fonction de la quantité de données utiles à transmettre, au moins dans une partie (1D1...4D19) des champs de données, et des bits de remplissage étant ensuite inscrits (123) dans la partie restante (4D20...8D36) des champs de données, et d'après lequel on regroupe (121) deux cadres de données (F1, F2) respectivement successifs en un cadre de données double avec un nombre double de champs de données, en reportant dans chacun des cadres de données (F1, F2) un bit d'identification (M1) que l'on fixe à la valeur logique ZERO ou UN, le bit d'identification (M1) indiquant ainsi s'il s'agit du premier (F1) ou du second (F2) des deux cadres de données.

2. Procédé (100) selon la revendication 1, d'après lequel on reporte (124) dans chaque cadre de données (F1), des bits d'indication (N1, N2, ...) qui indiquent la partie (1D1...4D19) des champs de données, dans laquelle on inscrit les données utiles à transmettre, et/ou la partie restante (4D20...8D36) des champs de données dans laquelle on inscrit les bits de remplissage.

3. Procédé (100) selon la revendication 2, d'après lequel on remplit successivement (122) les champs de données avec les données utiles à transmettre, en commençant par le premier champ de données (1D1), et on remplît (123), le cas échéant, les champs de données restants (4D20...8D36), avec les bits de remplissage, et d'après lequel chaque cadre de données (F1) contient un champ de tête dans lequel on reporte (124) les bits d'indication (N1, N2, ...) qui indiquent une adresse qui marque l'endroit à l'intérieur du cadre de données jusqu'où le cadre de données (F1) peut être rempli avec les données utiles.

4. Procédé (100) selon la revendication 3, d'après lequel on remplit successivement (122) les champs de données des cadres de données regroupés (F1, F2), avec les données utiles à transmettre, en commençant par le premier champ de données (1D1) du premier cadre de données (F1), et on remplit (123), le cas échéant, les champs de données restants, avec les bits de remplissage, et d'après lequel les bits d'indication (N1, N2, ...) du premier cadre de données (F1) indiquent, avec les bits d'indication (N6, N7, ...) du second cadre de données (F2), une adresse qui marque l'endroit jusqu'où les cadres de données regroupés (F1, F2) peuvent être remplis avec les données utiles.

5. Procédé (100) selon la revendication 1, d'après lequel un terminal d'abonné (M) sans fil fonctionnant dans le premier système de radiocommunication mobile (2G) est transféré sur le second système de radiocommunication mobile (3G) par le fait que l'on transmet (120) par l'intermédiaire de l'interface (A*), de manière transparente et à l'intérieur des cadres de données (F1, F2), les données utiles émises et reçues par le terminal d'abonné (M) sans fil, les bits d'indication (N1, N2, ...) indiquant les champs de données (1D1 ... 4D19) dans lesquels on inscrit les données utiles à transmettre, et/ou les champs de données (4D20 ... 8D36) dans lesquels on inscrit les bits de remplissage.

6. Procédé selon la revendication 1, d'après lequel un terminal d'abonné (M) sans fil fonctionnant dans le second système de radiocommunication mobile (3G) est transféré sur le premier système de radiocommunication mobile (2G) par le fait que l'on transmet par l'intermédiaire de l'interface (A*), de manière non transparente et selon un mécanisme de sécurisation (RLP) pouvant être sélectionné parmi différents mécanismes de sécurisation, les données utiles émises et reçues par le terminal d'abonné (M) sans fil, d'après lequel on reporte dans le cadre de données (F) des bits de commande (C1, C2, ...) qui indiquent (V110) le mécanisme de sécurisation sélectionné, et d'après lequel on inscrit les données utiles dans les champs de données (1D1 ... 8D36) du cadre de données (F) conformément audit mécanisme de sécurisation (RLP) sélectionné.

7. Central de commutation de radiocommunication mobile (2GMSC) pour un premier système de radiocommunication mobile (2G) comprenant un circuit d'interface (2GIF) qui est conçu de façon à échanger des données utiles avec un second central de commutation de radiocommunication mobile (3GMSC) d'un second système de radiocommunication mobile (3G), par le fait que le circuit d'interface (2GIF) émet et reçoit les données utiles avec un débit de transmission de données utiles que l'on peut faire varier, à l'intérieur de cadres de données (F1, F2), chaque cadre de données (F1) comprenant un nombre prédéterminé fixe de champs de données (1D1...1D36; 2D1...2D36; ... ; 8D1...8D36), dans au moins une partie (1D1...4D19) desquels sont inscrites, en fonction de la quantité de données utiles à transmettre, les données utiles, et dans la partie restante (4D20...8D36) desquels sont inscrits des bits de remplissage, et le circuit d'interface (2GIF) recevant respectivement deux cadres de données successifs (F1, F2), qui sont regroupés en un cadre de données double avec un nombre double de champs de données, et dans lesquels est respectivement reporté un bit d'identification (M1) qui est fixé à la valeur logique ZERO ou UN, le bit d'identification (M1) indiquant ainsi s'il s'agit du premier (F1) ou du second (F2) des deux cadres de données.

8. Central de commutation de radiocommunication mobile (3GMSC) pour un second système de radiocommunication mobile (3G) comprenant un circuit d'interface (3GIF) qui est conçu de façon à échanger des données utiles avec un premier central de commutation de radiocommunication mobile (2GMSC) d'un premier système de radiocommunication mobile (2G), par le fait que le circuit d'interface (3GIF) émet et reçoit les données utiles avec un débit de transmission de données utiles que l'on peut faire varier, à l'intérieur de cadres de données (F1, F2), chaque cadre de données (F1) comprenant un nombre prédéterminé fixe de champs de données (1D1...1D36; 2D1...2D36; ... ; 8D1...8D36), dans au moins une partie (1D1...4D19) desquels sont inscrites, en fonction de la quantité de données utiles à transmettre, les données utiles, et dans la partie restante (4D20...8D36) desquels sont inscrits des bits de remplissage, et le circuit d'interface (3GIF) regroupant et émettant respectivement deux cadres de données successifs (F1, F2) sous la forme d'un cadre de données double avec un nombre double de champs de données, par le fait que le circuit d'interface (3GIF) reporte respectivement dans les cadres de données (F1, F2), un bit d'identification (M1) qu'il fixe à la valeur logique ZERO ou UN, le bit d'identification (M1) indiquant ainsi s'il s'agit du premier (F1) ou du second (F2) des deux cadres de données.

9. Circuit d'interface (2GIF) pour un central de commutation de radiocommunication mobile (2GMSC) d'un premier système de radiocommunication mobile (2G), qui est conçu de façon à échanger des données utiles avec un second central de commutation de radiocommunication mobile (3GMSC) d'un second système de radiocommunication mobile (3G), par le fait que le circuit d'interface (2GIF) émet et reçoit les données utiles avec un débit de transmission de données utiles que l'on peut faire varier, à l'intérieur de cadres de données (F1, F2), chaque cadre de données (F1) comprenant un nombre prédéterminé fixe de champs de données (1D1...1D36 ; 2D1...2D36 ; ... ; 8D1...8D36), dans au moins une partie (1D1...4D19) desquels sont inscrites, en fonction de la quantité de données utiles à transmettre, les données utiles, et dans la partie restante (4D20...8D36) desquels sont inscrits des bits de remplissage, et le circuit d'interface (2GIF) recevant respectivement deux cadres de données successifs (F1, F2), qui sont regroupés en un cadre de données double avec un nombre double de champs de données, et dans lesquels est respectivement reporté un bit d'identification (M1) qui est fixé à la valeur logique ZERO ou UN, le bit d'identification (M1) indiquant ainsi s'il s'agit du premier (F1) ou du second (F2) des deux cadres de données.

10. Circuit d'interface (3GIF) pour un central de commutation de radiocommunication mobile (3GMSC) d'un second système de radiocommunication mobile (3G), qui est conçu de façon à échanger des données utiles avec un premier central de commutation de radiocommunication mobile (2GMSC) d'un premier système de radiocommunication mobile (2G), par le fait que le circuit d'interface (3GIF) émet et reçoit les données utiles avec un débit de transmission de données utiles que l'on peut faire varier, à l'intérieur de cadres de données (F1, F2), chaque cadre de données (F1) comprenant un nombre prédéterminé fixe de champs de données (1D1...1D36 ; 2D1...2D36 ; ... ; 8D1...8D36), dans au moins une partie (1D1...4D19) desquels sont inscrites, en fonction de la quantité de données utiles à transmettre, les données utiles, et dans la partie restante (4D20...8D36) desquels sont inscrits des bits de remplissage, et le circuit d'interface (3GIF) regroupant et émettant respectivement deux cadres de données successifs (F1, F2) sous la forme d'un cadre de données double avec un nombre double de champs de données, par le fait que le circuit d'interface (3GIF) reporte respectivement dans les cadres de données (F1, F2), un bit d'identification (M1) qu'il fixe à la valeur logique ZERO ou UN, le bit d'identification (M1) indiquant ainsi s'il s'agit du premier (F1) ou du second (F2) des deux cadres de données.
